# EUROPEAN PATENT APPLICATION

(11) **EP 1 424 524 A1**
(43) Date of publication of application: **02.06.2004**
(21) Application number: 02026603.7
(22) Date of filing: 28.11.2002
(51) Int. Cl.: F21S 8/00, F21Y 101/02

(54) **Decorative light**

(71) Applicant: Heshan Jian Hao Lighting Ind. Co., Ltd., He Shan City, Guang Dong Province (CN)
(72) Inventor: Huang, Kuo-Hao, Taipei (TW)
(74) Representative: Kihn, Pierre Emile Joseph

(57) **Abstract**

A decorative light, which generates a visual icicle effect, has a base (10) in which a light emitting element is (11) retained and a light pervious stick (20) with one end securely mounted on the base (10). The light pervious stick (20) is preferably made of solid transparent acrylic resin and has multiple air bubbles (21) disposed therein. When the light emitting element (11) is activated and generates a light beam, such as the white light, a phenomenon of the light diffuse reflection is generated due to the air bubbles (21) so the decorative lights simulated the real icicle.

## Description

### 1. Field of the Invention

The invention is related to a decorative light, and more particularly to a decorative light capable of simulating a visual effect of an icicle.

### 2. Description of Related Arts

In a conventional decorative light, lamp bulbs are usually connected to form a particular pattern such as a net-shaped pattern or a light string, and are electrically powered by a power source to generate illumination or flashing effects. Such a conventional lamp string not only is monotonous, but also is bothersome and inconvenient in storing as it has been taken down from an ornamental object such as a Christmas tree.

However, the cost of acquiring and powering such intricate decorative patterns can be very considerable, and beyond the purchasing ability of many people. On the other hand, a single decorative light, though economic, lacks variety and only includes two statuses, being turned off or being turned on.

To overcome the mentioned shortcomings, a decorative light in accordance with the present invention obviates or mitigates the aforementioned problems.

The main objective of the present invention is to provide a decorative light that is capable of stimulating a particular visual effect of an icicle.

To accomplish the objective, the decorative light is constructed from:
a base in which a light emitting element is disposed;
a light pervious stick portion with one end mounted on the base to seal the light emitting element therein, wherein the light pervious stick portion has multiple air bubbles disposed therein. So when the light emitting element is activated to generate a light beam, the light beam is diffused out due to the multiple air bubbles and thereby provides the visual effect of an icicle.

The features and structure of the present invention will be more clearly understood when taken in conjunction with the accompanying figures.
In the drawings:
Fig. 1 is a cross-sectional view of a decorative light in accordance with the present invention;
Fig. 2 is an elevational view of the decorative light of Fig. 1;
Fig. 3 is an operational view showing a light emitting element of the decorative light is activated and light is diffused out;
Fig. 4 is an operational view showing multiple decorative lights as shown in Fig. 1 are connected to form a light string; and
Fig. 5 is another operational view showing multiple decorative lights as shown in Fig. 1 are arranged on a base.

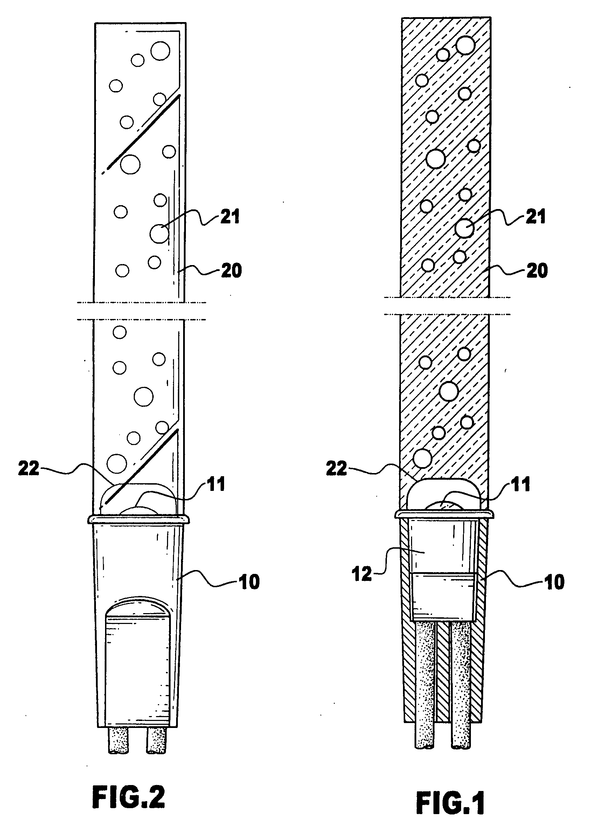

With reference to Figs. 1 and 2, a decorative light in accordance with the present invention is mainly composed of a base (10) and a light pervious stick (20). A light emitting element (11), such as an LED received in a holder (12), is retained inside the base (10), wherein two wires of the light emitting element (11) extend through the holder (12) and the base (10) are for connection to a power source. Basically, the entire base (10) together with the light emitting element (11) is substantially the same as a Christmas light.

The light pervious stick (20) is solid and has multiple air bubbles (21) disposed therein. One preferable material for the light pervious stick (20) is acrylic resin because such a transparent material is extremely like the real icicles and it is easy to form the air bubbles (21) inside the light pervious stick (20) during the manufacturing process. At one end of the light pervious stick (20), a concavity (22) is defined. The end having the concavity (22) of the light pervious stick (20) is securely mounted on the base (10) to seal the light emitting element (11). The connection between the base (10) and the light pervious stick (20) is able to be accomplished by means of sticking with adhesive.

In order to obtain a preferable decorative effect, the light emitting element (11) is chosen for generating white light, and the light pervious stick (20) is made of completely transparent material. However, for enriching the decorative effects, the light color may be varied.

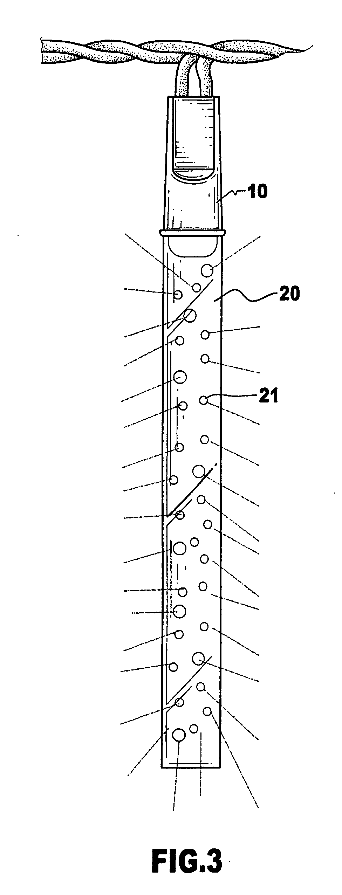

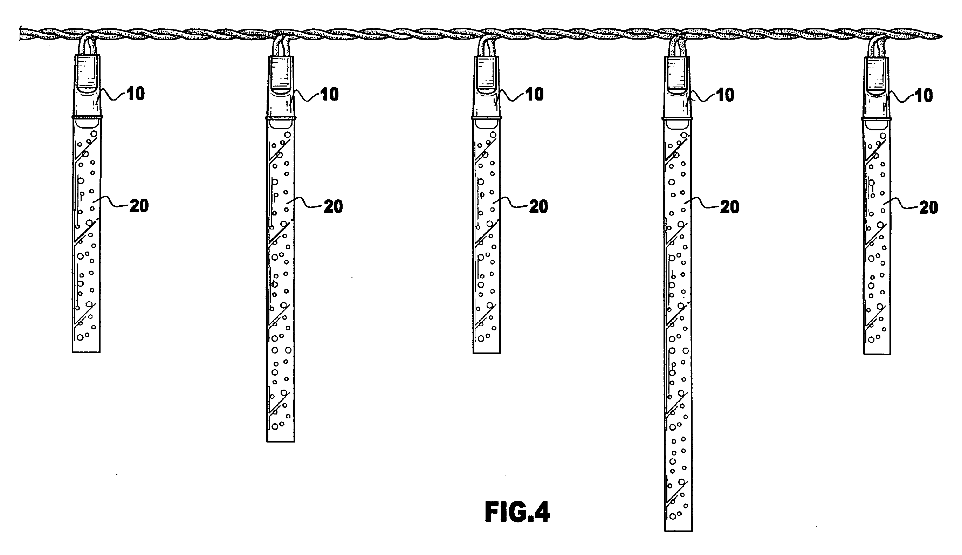

With reference to Figs. 3 and 4, multiple decorative lights of the present invention are connected as a light string. When the light emitting element (11) is activated and generates a light beam passing through the light pervious stick (20), since multiple air bubbles (21) are inside the light pervious stick (20), the phenomenon of light diffused reflections is occurred as represented with broken lines in Fig. 3. Therefore, the entire light string is able to simulate an attractive visual effect of the icicle.

For example, when the light string is decorated along the eaves of the house and activated at night, the shining light string is like a scenery that a light beam irradiates multiple real icicles and each icicle just reflects the light beam.

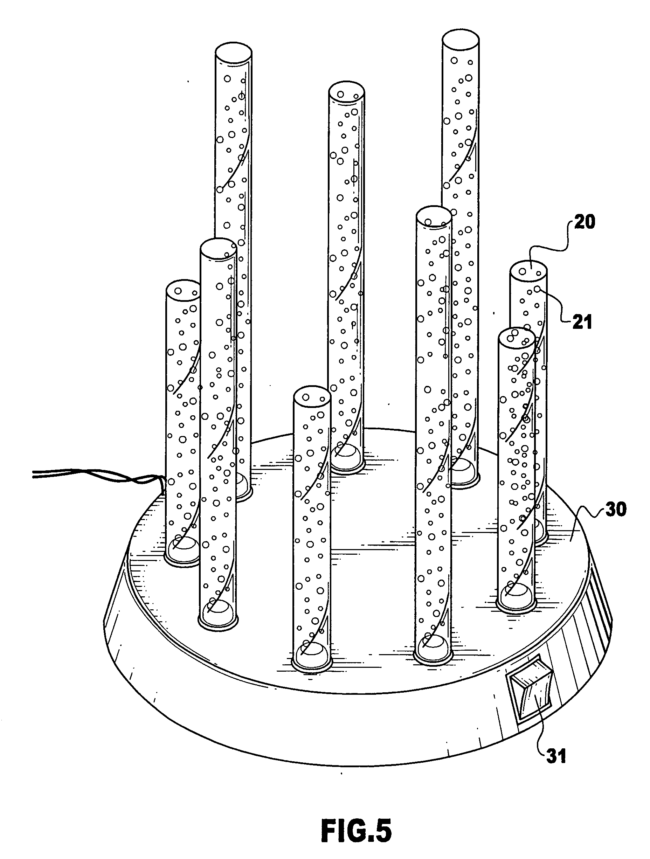

With reference to Fig. 5, multiple decorative lights in accordance with the present invention are collectively arranged on a base (30) to form a beautiful ornament. When a switch (31) mounted on the base (30) is turned on, each decorative light is activated to provide a visual effect of icicles.

The foregoing description of the preferred embodiments of the present invention is intended to be illustrative only and, under no circumstances, should the scope of the present invention be restricted by the description of the specific embodiment.

## Claims

1. A decorative light comprising:
a base (10) inside which a light emitting element (11) is retained;
a light pervious stick (20) with one end securely mounted on the base (10) to seal the light emitting element (11), wherein multiple air bubbles (21) are disposed inside the light pervious stick (20) to generate a phenomenon of light diffused reflections when the light emitting element (11) is activated.

2. The decorative light as claimed in claim 1, wherein the light pervious stick (20) is made of transparent acrylic.

3. The decorative light as claimed in claim 1, wherein the light emitting element (11) is an LED and generates white light.

4. The decorative light as claimed in claim 2, wherein the light emitting element (11) is an LED and generates white light.

5. The decorative light as claimed in claim 1, wherein the end mounted on the base (10) of the light pervious stick (20) is defined with a concavity.

6. The decorative light as claimed in claim 2, wherein the end mounted on the base (10) of the light pervious stick (20) is defined with a concavity.

7. The decorative light as claimed in claim 3, wherein the light pervious stick (20) is stuck to the base (10) with adhesive.

8. The decorative light as claimed in claim 4, wherein the light pervious stick (20) is stuck to the base (10) with adhesive.

9. The decorative light as claimed in claim 5, wherein the light pervious stick (20) is stuck to the base (10) with adhesive.

10. The decorative light as claimed in claim 6, wherein the light pervious stick (20) is stuck to the base (10) with adhesive.
